# FASCICULE DE BREVET EUROPEEN

(11) **EP 3 377 582 B1**
(45) Date de publication et mention de la délivrance du brevet: **04.08.2021**
(21) Numéro de dépôt: 16795048.4
(22) Date de dépôt: 14.11.2016
(51) Int. Cl.: C08L 77/06, C08G 69/36

(54) **COMPOSITION À BASE DE POLYAMIDE AMORPHE PRÉSENTANT UNE STABILITÉ DIMENSIONNELLE AMÉLIORÉE**
ZUSAMMENSETZUNG AUF DER BASIS EINES AMORPHEN POLYAMIDS MIT VERBESSERTER DIMENSIONSSTABILITÄT
COMPOSITION BASED ON AN AMORPHOUS POLYAMIDE HAVING IMPROVED DIMENSIONAL STABILITY

(30) Priorité: 17.11.2015 FR 1561068
(43) Date de publication de la demande: 26.09.2018
(73) Titulaire: Arkema France, 92700 Colombes (FR)
(72) Inventeur: BRULE, Benoît, 27170 Beaumont-le-Roger (FR); SAILLARD, Benjamin, 27300 Bernay (FR); LOYEN, Karine, 27500 Pont-Audemer (FR); BLONDEL, Philippe, 27300 Bernay (FR)
(74) Mandataire: Lavoix
(86) Numéro de dépôt international: PCT/EP2016/077535
(87) Numéro de publication internationale: WO 2017/084996

(56) Documents cités:
- WO-A1-2014/081594
- WO-A1-2015/132510
- US-A- 5 416 172
- US-A1- 2014 179 850

## Description

La présente invention concerne l'amélioration de la stabilité dimensionnelle d'une composition à base de polyamide amorphe par diminution de son taux d'absorption en eau à la température d'utilisation, en particulier à température ambiante.

Les compositions polyamide ont de très nombreuses applications dans l'industrie pour la préparation d'articles ou d'éléments d'article.

La demande WO 2014/081594 décrit une encre d'impression additive pour imprimante 3D comprenant un polyamide semi-cristallin et un polyamide amorphe. Les articles imprimés sont décrits comme ayant une bonne stabilité dimensionnelle, celle-ci étant caractérisée par un faible gondolage (« curling »).La demande US 2014/0179850 décrit un article résistant à la couleur et préparé à partir d'une composition de moulage comprenant notamment 30 à 100% en poids d'un polyamide ou mélange de polyamide consistant en :
- (A1) 50-100%wt d'un polyamide amorphe ou semi-cristallin de température de transition vitreuse supérieure ou égale à 100°C de composition spécifique,
- (A2) 0-50%wt d'un polyamide semi-aromatique différent de (A1).
L'article de D3 est décrit comme présentant une bonne stabilité dimensionnelle, celle-ci étant mesurée par le retrait après le moulage.

Les compositions polymériques et les articles qui en sont composés absorbent de l'humidité provenant du milieu environnant, ce qui provoque un gonflement des compositions. Ces changements dimensionnels peuvent être néfastes pour certaines applications, pour lesquelles la côte des pièces doit être respectée et notamment ne doit pas évoluer au fil du temps. Ces objets peuvent en particulier être obtenus par le procédé d"injection.

Les polyamides amorphes transparents peuvent présenter une stabilité dimensionnelle inférieure à celle d'autres polymères amorphes transparents. Par exemple, le taux d'absorption d'eau mesuré selon la norme ISO 62 révisée en 2011 à 23°C dans l'eau du poly(méthyl méthacrylate) (PMMA) amorphe est de 0,8%, celui du polycarbonate est de 0,35%, alors que celui du polyamide 12/MACM.I/MACM.T est de 3,3%.

Le développement de nouvelles compositions polyamides à base de polyamide amorphe présentant une stabilité dimensionnelle à température ambiante améliorée est donc requis.

Ci-après est décrite une composition comprenant :
- 50 à 95% en poids, notamment 60 à 90% en poids, de préférence de 65 à 85% en poids d'un polyamide amorphe ou d'un mélange de polyamides amorphes, et
- 5 à 50% en poids, notamment 10 à 40% en poids, de préférence de 15 à 35% en poids d'un polyamide semi-cristallin dont le nombre moyen d'atomes de carbone (C) par rapport à l'atome d'azote (N) est supérieur ou égal à 8 ou d'un mélange de polyamides semi-cristallins dans lequel le nombre moyen d'atomes de carbone (C) par rapport à l'atome d'azote (N) de chacun des polyamides semi-cristallins est supérieur ou égal à 8,
sous réserve que lorsque le polyamide amorphe est le PA MACM.12 (B.12), le polyamide semi-cristallin ne soit pas un PA 12.

Les plages de concentrations doivent être considérées comme bornes comprises.

La présente invention repose sur la découverte que l'introduction d'un polyamide semi-cristallin à longue chaine (c'est-à-dire comprenant un nombre moyen d'atomes de carbone (C) par rapport à l'atome d'azote (N) est supérieur ou égal à 8) ou d'un mélange de polyamides semi-cristallin à longue chaine dans une composition à base de polyamide amorphe permet de diminuer son taux d'absorption en eau et donc d'améliorer sa stabilité dimensionnelle.

Un polyamide amorphe, au sens de l'invention, désigne un polyamide transparent amorphe présentant seulement une température de transition vitreuse (pas de température de fusion (Tf)), ou un polyamide très peu cristallin ayant une température de transition vitreuse et un point de fusion tel que l'enthalpie de cristallisation lors de l'étape de refroidissement à une vitesse de 20K/min en analyse calorimétrique différentielle (« Differential Scanning Calorimetry » DSC en anglais) mesurée selon la norme ISO 11357-3 de 2013 est inférieure à 30 J/g, notamment inférieure à 20 J/g, de préférence inférieure à 15 J/g. La température de transition vitreuse (Tg) mesurée par DSC à une vitesse de chauffe de 20K/min selon la norme ISO 11357-1 de 2009 et ISO 11357-2 de 2013 pour ces polyamides est supérieure à 75°C.

Un polyamide semi-cristallin, au sens de l'invention, désigne un polyamide qui présente une température de fusion (Tf) en DSC selon la norme ISO 11357-3 de 2011, et une enthalpie de cristallisation lors de l'étape de refroidissement à une vitesse de 20K/min en DSC mesurée selon la norme ISO 11357-3 de 2013 supérieure à 30 J/g, de préférence supérieure à 40 J/g.

Sauf mention contraire, les modes de réalisation ci-dessous sont applicables indépendamment pour le polyamide semi-cristallin et pour le polyamide amorphe (ou chacun des polyamides amorphes lorsque la composition comprend un mélange de polyamides amorphes, ou chacun des polyamides semi-cristallins lorsque la composition comprend un mélange de polyamides semi-cristallins).

Les polyamides utilisés dans la composition mise en œuvre dans l'utilisation selon l'invention comprennent au moins deux motifs répétitifs identiques ou distincts, ces motifs pouvant être formés à partir d'un diacide carboxylique et d'une diamine, d'un diisocyanate et d'un diacide carboxylique, d'un amino-acide, d'un lactame ou de leurs mélanges.

Le polyamide peut être un homopolyamide et comprendre au moins deux motifs répétitifs identiques obtenu à partir d'un aminoacide, obtenu à partir d'un lactame, ou répondant à la formule (diamine en Ca).(diacide en Cb), avec a représentant le nombre d'atome de carbones de la diamine et b représentant le nombre d'atome de carbones du diacide, a et b étant chacun indépendamment compris entre 4 et 36, tels que définis ci-dessous. Lorsque le polyamide semi-cristallin est un homopolyamide comprenant un motif amide répondant à la formule (diamine en Ca).(diacide en Cb), la somme (a + b)/2 est supérieure ou égale à 8, de préférence supérieur ou égal à 9, en particulier supérieur ou égal à 10.

Lorsque le polyamide semi-cristallin est un homopolyamide :
- obtenu par polymérisation d'un aminoacide ou d'un lactame, le nombre d'atomes de carbone de cet aminoacide ou de ce lactame est au moins égal à 8, de préférence supérieur ou égal à 9, en particulier supérieur ou égal à 10,
- comprenant un motif amide répondant à la formule (diamine en Ca).(diacide en Cb), la somme (a + b)/2 est supérieure ou égale à 8, de préférence supérieur ou égal à 9, en particulier supérieur ou égal à 10. Ainsi le PA 6.12 est un PA à 9 atomes de carbone par atome d'azote, autrement dit un PA en C9. Le PA 6.13 est en C9,5. Le PA 12.T est en C10, le T (acide téréphtalique) étant en C8.

Le polyamide peut également être un copolyamide et comprendre au moins deux motifs répétitifs distincts, ces motifs pouvant indépendamment être obtenus à partir d'un aminoacide, obtenu à partir d'un lactame, obtenu à partir d'un diisocyanate et d'un diacide carboxylique, ou répondant à la formule (diamine en Ca).(diacide en Cb), avec a représentant le nombre d'atomes de carbones de la diamine et b représentant le nombre d'atomes de carbones du diacide, a et b étant chacun indépendamment compris entre 4 et 36.

Lorsque le polyamide semi-cristallin est un copolyamide, le nombre d'atomes de carbone par atome d'azote calculé au prorata molaire des différents motifs amides est au moins égal à 8, de préférence supérieur ou égal à 9, en particulier supérieur ou égal à 10. Dans un mode de réalisation, chacun des motifs amide du copolyamide semi-cristallin a un nombre moyen d'atomes de carbone (C) par rapport à l'atome d'azote (N) supérieur ou égal à 8, de préférence supérieur ou égal à 9, en particulier supérieur ou égal à 10. Par exemple, le polyamide semi-cristallin peut être un copolyamide comprenant au moins un motif obtenu par polymérisation d'un lactame, le nombre d'atomes de carbone de ce lactame étant au moins égal à 8, et au moins un motif amide répondant à la formule (diamine en Ca).(diacide en Cb), la somme (a + b)/2 étant supérieure ou égale à 8.

Dans le cas des copolyamides, le calcul du nombre d'atomes de carbone par atome d'azote est réalisé au prorata molaire des différents motifs amides.

Le polyamide peut comprendre au moins un motif obtenu à partir d'un aminoacide choisi parmi l'acide 9-aminononanoïque, l'acide 10-aminodécanoïque, l'acide 12-aminododécanoïque et l'acide 11- aminoundécanoïque ainsi que ses dérivés, notamment l'acide N-heptyl-11-aminoundécanoïque.

Le polyamide peut comprendre au moins un motif obtenu à partir d'un lactame choisi parmi la pyrrolidinone, la piperidinone, le caprolactame, l'énantholactame, le caprylolactame, le pelargolactame, le décanolactame, l'undécanolactame, et le laurolactame. Bien sûr, si le polyamide semi-cristallin est un homopolyamide comprenant un motif obtenu à partir d'un lactame, celui-ci contient au moins 8 atomes de carbone est est donc notamment choisi parmi le caprylolactame, le pelargolactame, le décanolactame, l'undécanolactame, et le laurolactame.

Le polyamide peut comprendre au moins un motif répondant à la formule (diamine en Ca).(diacide en Cb). La diamine en Ca peut être aliphatique (notamment aliphatique linéaire), cycloaliphatique ou alkylaromatique. Lorsque la diamine est aliphatique et linéaire, le motif (diamine en Ca) a la formule H₂N-(CH₂)ₐ-NH₂. Le diacide en Cb peut être aliphatique (notamment aliphatique linéaire), cycloaliphatique ou aromatique.

Préférentiellement, lorsque la diamine en Ca est linéaire et aliphatique, elle est choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécanediamine (a=18), l'eicosanediamine (a=20), la docosanediamine (a=22) et les diamines obtenues à partir d'acides gras.

Lorsque la diamine en Ca est cycloaliphatique, elle est choisie de préférence parmi celles comprenant deux cycles. Elles répondent notamment à la formule générale suivante : 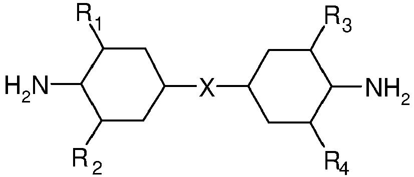 dans laquelle :
- R₁, R₂, R₃ et R₄ représentent indépendamment un groupe choisi parmi un atome d'hydrogène ou un alkyle de 1 à 6 atomes de carbone et
- X représente soit une liaison simple, soit un groupement divalent constitué :
   - d'une chaîne aliphatique linéaire ou ramifiée comprenant de 1 à 10 atomes de carbone, éventuellement substituée par des groupements cycloaliphatiques ou aromatiques de 6 à 8 atomes de carbone, ou
   - d'un groupement cycloaliphatique de 6 à 12 atomes de carbone.
Plus préférentiellement, la diamine cycloaliphatique Ca du polyamide est choisie parmi la bis(3,5-dialkyl-4-aminocyclohexyl)méthane, la bis(3,5-dialkyl-4-aminocyclohexyl) éthane, la bis(3,5-dialkyl-4-aminocyclohexyl)propane, la bis(3,5- dialkyl-4-aminocyclohexyl)butane, la bis-(3-méthyl-4-aminocyclohexyl)-méthane (notée BMACM, MACM ou B), la p-bis(aminocyclohexyl)-méthane (PACM) et la bis(aminocyclohexyl)propane (PACP) (2,2-bis(4-aminocyclohexyl) propane).

Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

De préférence, lorsque la diamine est alkylaromatique, elle est choisie parmi la 1,3-xylylène diamine, la 1,4-xylylène diamine et leur mélange.

De préférence, lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanoïque (b=18), l'acide octadécènedioïque (b=18), l'acide eicosanedioïque (b=20), l'acide docosanedioïque (b=22) et les dimères d'acides gras contenant 36 carbones.

De préférence, lorsque le monomère (diacide en Cb) est aromatique, il est choisi parmi l'acide téréphtalique noté T, l'acide isophtalique noté I et le diacide naphtalénique.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornylméthane, cyclohexylméthane, dicyclohexylméthane, dicyclohexylpropane, di(méthylcyclohexyl) propane.

A l'exception de l'acide N-heptyl-11-aminoundécanoïque, les dimères d'acides gras et les diamines cycloaliphatiques décrits ci-dessus sont linéaires. Toutefois, les produits de départ pour la préparation du polyamide (aminoacides, diamines, diacides) peuvent être tout ou partie ramifiés, tel que le 2-méthyl-1,5-diaminopentane, ou partiellement insaturés. Par exemple, le diacide carboxylique en C18 peut être l'acide octadécanedioïque, qui est saturé, ou bien l'acide octadécènedioïque, qui présente quant-à-lui une insaturation.

La nomenclature utilisée pour définir les polyamides est décrite dans la norme ISO 16396-1 : 2015 « Plastiques -- Matériaux polyamides (PA) pour moulage et extrusionPartie 1: Système de désignation, marquage des produits et base de spécification ».

Dans un mode de réalisation, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est telle que définie ci-dessus et le diacide en Cb est un diacide aliphatique (notamment tel que défini ci-dessus), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Ce polyamide amorphe peut être un homopolyamide ou un copolyamide. Par exemple, la diamine en Ca est choisie parmi la décanediamine (a=10), la dodécanediamine (a=12), PACM et MACM et/ou le diacide en Cb est choisi parmi l'acide sébacique (b=10), l'acide dodécanedioïque (b=12), l'acide tetradécanedioïque (b=14) et l'acide octadécanoïque (b=18). De préférence, le polyamide amorphe (ou lorsque la composition comprend un mélange de polyamides amorphes, au moins l'un des polyamides amorphes, voire même chacun des polyamides amorphes) est le PA MACM.10, le PA PACM.10, le PA MACM.12, le PA PACM.12, le PA MACM.14, le PA PACM.14, le PA MACM.18, le PA PACM.18, le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18, le PA 12.14/PACM.18, le PA PACM.10/MACM.10, le PA PACM.12/MACM.12, le PA PACM.14/MACM.14, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12, ou le PA 12/PACM.14/MACM.14. Le polyamide amorphe (ou lorsque la composition comprend un mélange de polyamides amorphes, au moins l'un des polyamides amorphes, voire même chacun des polyamides amorphes) peut par exemple être PA MACM.10, PA MACM.12, PA MACM.14, ou PA Z/MACM.10, PA Z/MACM.12, PA Z/MACM.14, dans lesquels Z représente 11, 12, 10.10 ou 10.12 ou un polyamide tel que décrit dans la demande de brevet EP 1 595 907.

Dans un mode de réalisation, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est cycloaliphatique (notamment telle que définie ci-dessus) et le diacide en Cb est tel que défini ci-dessus, le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est PACM ou MACM et/ou le diacide en Cb est choisi parmi l'acide sébacique (b=10), l'acide dodécanedioïque (b=12), l'acide tetradécanedioïque (b=14) et l'acide octadécanoïque (b=18). Ce polyamide amorphe (ou lorsque la composition comprend un mélange de polyamides amorphes, au moins l'un des polyamides amorphes, voire même chacun des polyamides amorphes) peut être un homopolyamide ou un copolyamide.

De préférence, le polyamide amorphe (ou lorsque la composition comprend un mélange de polyamides amorphes, au moins l'un des polyamides amorphes, voire même chacun des polyamides amorphes) est le PA MACM.10, le PA PACM.10, le PA MACM.12, le PA PACM.12, le PA MACM.14, le PA PACM.14, le PA MACM.18, le PA PACM.18, le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18, le PA 12.14/PACM.18, le PA PACM.10/MACM.10, le PA PACM.12/MACM.12, le PA PACM.14/MACM.14, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12, le PA 12/PACM.14/MACM.14, le PA MACM.I, le PA PACM.I, le PA MACM.I/MACM.T, le PA PACM.I/PACM.T, le PA 12/MACM.I, le PA 12/PACM.I, le PA 12/MACM.I/MACM.T, le PA 12/PACM.I/PACM.T, le PA 11/MACM.I, le PA 11/PACM.I, le PA 11/MACM.I/MACM.T, le PA 11/PACM.I/PACM.T, le 10.10/MACM.I, le 10.10/PACM.I, le PA 10.10/MACM.I/MACM.T, le 10.10/PACM.I/PACM.T, le 10.12/MACM.I, le 10.12/PACM.I, le PA 10.12/MACM.I/MACM.T, le 10.12/PA PACM.I/PACM.T, le 12.10/MACM.I, le 12.10/PA PACM.I, le PA 12.10/MACM.I/MACM.T, le 12.10/PACM.I/PACM.T, le 12.12/MACM.I, le 12.12/PACM.I, le PA 12.12/MACM.I/MACM.T, le 12.12/PACM.I/PACM.T, le 12.14/MACM.I, le 12.14/PACM.I, le PA 12.14/MACM.I/MACM.T, le 12.14/PACM.I/PACM.T, le 10.14/MACM.I, le 10.14/PACM.I, le PA 10.14/MACM.I/MACM.T ou le 10.14/PACM.I/PACM.T. Le polyamide amorphe (ou lorsque la composition comprend un mélange de polyamides amorphes, au moins l'un des polyamides amorphes, voire même chacun des polyamides amorphes) peut par exemple être PA MACM.10, PA MACM.12, PA MACM.14, PA Z/MACM.10, PA Z/MACM.12, PA Z/MACM.14, PA Z/MACM.I ou PA Z/MACM.I/MACM.T dans lesquels Z représente 11, 12, 10.10 ou 10.12, ou un copolyamide tel que décrit dans la demande de brevet WO 2009/153534.

Dans un mode de réalisation, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est telle que définie ci-dessus et le diacide en Cb est un diacide aromatique (notamment tel que défini ci-dessus), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus.

Dans un mode de réalisation, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est cycloaliphatique (notamment telle que définie ci-dessus) et le diacide en Cb est un diacide aromatique (notamment tel que défini ci-dessus), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est PACM ou MACM et/ou le diacide en Cb est l'acide téréphtalique ou l'acide isophtalique. Ce polyamide amorphe peut être un homopolyamide ou un copolyamide. De préférence, le polyamide amorphe (ou lorsque la composition comprend un mélange de polyamides amorphes, au moins l'un des polyamides amorphes, voire même chacun des polyamides amorphes) est le PA MACM.I, le PA PACM.I, le PA MACM.I/MACM.T, le PA PACM.I/PACM.T, le PA 12/MACM.I, le PA 12/PACM.I, le PA 12/MACM.I/MACM.T, le PA 12/PACM.I/PACM.T, le PA 11/MACM.I, le PA 11/PACM.I, le PA 11/MACM.I/MACM.T, le PA 11/PACM.I/PACM.T, le 10.10/MACM.I, le 10.10/PACM.I, le PA 10.10/MACM.I/MACM.T, le 10.10/PACM.I/PACM.T, le 10.12/MACM.I, le 10.12/PACM.I, le PA 10.12/MACM.I/MACM.T, le 10.12/PA PACM.I/PACM.T, le 12.10/MACM.I, le 12.10/PA PACM.I, le PA 12.10/MACM.I/MACM.T, le 12.10/PACM.I/PACM.T, le 12.12/MACM.I, le 12.12/PACM.I, le PA 12.12/MACM.I/MACM.T, le 12.12/PACM.I/PACM.T, le 12.14/MACM.I, le 12.14/PACM.I, le PA 12.14/MACM.I/MACM.T, le 12.14/PACM.I/PACM.T, le 10.14/MACM.I, le 10.14/PACM.I, le PA 10.14/MACM.I/MACM.T ou le 10.14/PACM.I/PACM.T. Le polyamide amorphe (ou lorsque la composition comprend un mélange de polyamides amorphes, au moins l'un des polyamides amorphes, voire même chacun des polyamides amorphes) peut par exemple être PA Z/MACM.I ou PA Z/MACM.I/MACM.T dans lesquels Z représente 11, 12, 10.10 ou 10.12.

Dans un mode de réalisation, le polyamide amorphe (ou lorsque la composition comprend un mélange de polyamides amorphes, au moins l'un des polyamides amorphes, voire même chacun des polyamides amorphes) comprend au moins un motif répondant à la formule (diamine en Ca).(diacide en Cb) où la diamine en Ca est cycloaliphatique (notamment telle que définie ci-dessus) et le diacide en Cb est un diacide aliphatique (notamment tel que défini ci-dessus), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est PACM ou MACM et/ou le diacide en Cb est l'acide sébacique (b=10), l'acide dodécanedioïque (b=12), l'acide tetradécanedioïque (b=14) ou l'acide octadécanoïque (b=18). Ce polyamide amorphe peut être un homopolyamide ou un copolyamide. De préférence, le polyamide amorphe (ou lorsque la composition comprend un mélange de polyamides amorphes, au moins l'un des polyamides amorphes, voire même chacun des polyamides amorphes) est le PA MACM.10, le PA PACM.10, le PA MACM.12, le PA PACM.12, le PA MACM.14, le PA PACM.14, le PA MACM.18, le PA PACM.18, le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18, le PA 12.14/PACM.18, le PA PACM.10/MACM.10, le PA PACM.12/MACM.12, le PA PACM.14/MACM.14, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12, ou le PA 12/PACM.14/MACM.14. Le polyamide amorphe (ou lorsque la composition comprend un mélange de polyamides amorphes, au moins l'un des polyamides amorphes, voire même chacun des polyamides amorphes) peut par exemple être PA MACM.10, PA MACM.12, PA MACM.14, ou PA Z/MACM.10, PA Z/MACM.12, PA Z/MACM.14, dans lesquels Z représente 11, 12, 10.10 ou 10.12.

Dans un mode de réalisation, le polyamide amorphe (ou lorsque la composition comprend un mélange de polyamides amorphes, au moins l'un des polyamides amorphes, voire même chacun des polyamides amorphes) est un copolyamide, le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. De préférence, le polyamide amorphe (ou lorsque la composition comprend un mélange de polyamides amorphes, au moins l'un des polyamides amorphes, voire même chacun des polyamides amorphes) est le PA MACM.I/MACM.T, le PA PACM.I/PACM.T, le PA 12/MACM.I, le PA 12/PACM.I, le PA 12/MACM.I/MACM.T, le PA 12/PACM.I/PACM.T, le PA 11/MACM.I, le PA 11/PACM.I, le PA 11/MACM.I/MACM.T, le PA 11/PACM.I/PACM.T, le 10.10/MACM.I, le 10.10/PACM.I, le PA 10.10/MACM.I/MACM.T, le 10.10/PACM.I/PACM.T, le 10.12/MACM.I, le 10.12/PACM.I, le PA 10.12/MACM.I/MACM.T, le 10.12/PACM.I/PACM.T, le 12.10/MACM.I, le 12.10/PACM.I, le PA 12.10/MACM.I/MACM.T, le 12.10/PACM.I/PACM.T, le 12.12/MACM.I, le 12.12/PACM.I, le PA 12.12/MACM.I/MACM.T, le 12.12/PACM.I/PACM.T, le 12.14/MACM.I, le 12.14/PACM.I, le PA 12.14/MACM.I/MACM.T, le 12.14/PACM.I/PACM.T, le 10.14/MACM.I, le 10.14/PACM.I, le PA 10.14/MACM.I/MACM.T, le 10.14/PACM.I/PACM.T, le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18, le PA 12.14/PACM.18, le PA PACM.10/MACM.10, le PA PACM.12/MACM.12, le PA PACM.14/MACM.14, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12 ou le PA 12/PACM.14/MACM.14. Le polyamide amorphe (ou lorsque la composition comprend un mélange de polyamides amorphes, au moins l'un des polyamides amorphes, voire même chacun des polyamides amorphes) peut par exemple être PA Z/MACM.10, PA Z/MACM.12, PA Z/MACM.14, PA Z/MACM.I ou PA Z/MACM.I/MACM.T dans lesquels Z représente 11, 12, 10.10 ou 10.12, ou un copolyamide tel que décrit dans la demande de brevet WO 2009/153534.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif obtenu à partir d'un lactame ou d'un aminoacide, et
- au moins un motif répondant à la formule (diamine en Ca).(diacide en Cb), dans laquelle diamine en Ca et diacide en Cb sont tels que définis ci-dessus,
le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Le polyamide amorphe (ou lorsque la composition comprend un mélange de polyamides amorphes, au moins l'un des polyamides amorphes, voire même chacun des polyamides amorphes) peut par exemple être PA Z/MACM.10, PA Z/MACM.12, PA Z/MACM.14, PA Z/MACM.I ou PA Z/MACM.I/MACM.T, dans lesquels Z représente 11 ou 12. Par exemple, le lactame est le laurolactame ou l'aminoacide est l'acide 11-aminoundécanoïque et/ou la diamine en Ca est choisie parmi la décanediamine (a=10), la dodécanediamine (a=12), PACM et MACM et/ou le diacide en Cb est choisi parmi l'acide sébacique (b=10), l'acide dodécanedioïque (b=12), l'acide tetradécanedioïque (b=14), l'acide octadécanoïque (b=18), l'acide téréphtalique et l'acide isophtalique. De préférence, le polyamide amorphe (ou lorsque la composition comprend un mélange de polyamides amorphes, au moins l'un des polyamides amorphes, voire même chacun des polyamides amorphes) est le PA 12/MACM.I, le PA 12/PACM.I, le PA 12/MACM.I/MACM.T, le PA 12/PACM.I/PACM.T, le PA 11/MACM.I, le PA 11/PACM.I, le PA 11/MACM.I/MACM.T, le PA 11/PACM.I/PACM.T, le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12, ou le PA 12/PACM.14/MACM.14.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif obtenu à partir d'un lactame ou d'un aminoacide, et
- au moins un motif répondant à la formule (diamine en Ca).(diacide en Cb), où la diamine en Ca est cycloaliphatique (notamment telle que définie ci-dessus) et le diacide en Cb est un diacide aromatique (notamment tel que défini ci-dessus),
le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Le polyamide amorphe (ou lorsque la composition comprend un mélange de polyamides amorphes, au moins l'un des polyamides amorphes, voire même chacun des polyamides amorphes) peut par exemple être PA Z/MACM.I ou PA Z/MACM.I/MACM.T dans lesquels Z représente 11 ou 12. Par exemple, le lactame est le laurolactame ou l'aminoacide est l'acide 11-aminoundécanoïque et/ou la diamine en Ca est choisie parmi PACM et MACM et/ou le diacide en Cb est choisi parmi l'acide téréphtalique et l'acide isophtalique. De préférence, le polyamide amorphe (ou lorsque la composition comprend un mélange de polyamides amorphes, au moins l'un des polyamides amorphes, voire même chacun des polyamides amorphes) est le PA 12/MACM.I, le PA 12/PACM.I, le PA 12/MACM.I/MACM.T, le PA 12/PACM.I/PACM.T, le PA 11/MACM.I, le PA 11/PACM.I, le PA 11/MACM.I/MACM.T, ou le PA 11/PACM.I/PACM.T.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif obtenu à partir d'un lactame, et
- au moins un motif répondant à la formule (diamine en Ca).(diacide en Cb), où la diamine en Ca est cycloaliphatique (notamment telle que définie ci-dessus) et le diacide en Cb est un diacide aromatique (notamment tel que défini ci-dessus),
et est un polyamide PA A/Ca.Cb dans laquelle A est un lactame. Par exemple, le lactame est le laurolactame et/ou la diamine en Ca est choisie parmi PACM et MACM et/ou le diacide en Cb est choisi parmi l'acide téréphtalique et l'acide isophtalique.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif obtenu à partir d'un aminoacide, et
- au moins un motif répondant à la formule (diamine en Ca).(diacide en Cb), où la diamine en Ca est cycloaliphatique (notamment telle que définie ci-dessus) et le diacide en Cb est un diacide aromatique (notamment tel que défini ci-dessus), et
et est un polyamide PA A/Ca.Cb dans laquelle A est un aminoacide. Par exemple, l'aminoacide est l'acide 11-aminoundécanoïque et/ou la diamine en Ca est choisie parmi PACM et MACM et/ou le diacide en Cb est choisi parmi l'acide téréphtalique et l'acide isophtalique.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif répondant à la formule (diamine en Ca').(diacide en Cb'), où la diamine en Ca' est choisie parmi l'une des diamines en Ca définies ci-dessus et le diacide en Cb' est choisi parmi l'un des diacides en Cb définis ci-dessus et
- au moins un motif répondant à la formule (diamine en Ca).(diacide en Cb), où la diamine en Ca est cycloaliphatique (notamment telle que définie ci-dessus) et le diacide en Cb est un diacide aromatique (notamment tel que défini ci-dessus),
sous réserve que (diamine en Ca).(diacide en Cb) soit différent de (diamine en Ca').(diacide en Cb'),
et est un polyamide PA Ca'.Cb'/Ca.Cb. Par exemple, la diamine en Ca' est choisie parmi la décanediamine (a=10), la dodécanediamine (a=12), PACM et MACM et/ou le diacide en Cb' est choisi parmi l'acide sébacique (b=10), l'acide dodécanedioïque (b=12), l'acide tetradécanedioïque (b=14), l'acide octadécanoïque (b=18), l'acide téréphtalique et l'acide isophtalique et/ou la diamine en Ca est choisie parmi PACM et MACM et/ou le diacide en Cb est choisi parmi l'acide téréphtalique et l'acide isophtalique.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif obtenu à partir d'un lactame ou d'un aminoacide, et
- au moins un motif répondant à la formule (diamine en Ca).(diacide en Cb), où la diamine en Ca est cycloaliphatique (notamment telle que définie ci-dessus) et le diacide en Cb est un diacide aliphatique (notamment tel que défini ci-dessus),
le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Le polyamide amorphe (ou lorsque la composition comprend un mélange de polyamides amorphes, au moins l'un des polyamides amorphes, voire même chacun des polyamides amorphes) peut par exemple être PA Z/MACM.10, PA Z/MACM.12, PA Z/MACM.14, dans lesquels Z représente 11 ou 12. Par exemple, le lactame est le laurolactame ou l'aminoacide est l'acide 11-aminoundécanoïque et/ou la diamine en Ca est choisie parmi PACM et MACM et/ou le diacide en Cb est choisi parmi l'acide sébacique (b=10), l'acide dodécanedioïque (b=12), l'acide tetradécanedioïque (b=14) et l'acide octadécanoïque (b=18). De préférence, le polyamide amorphe (ou lorsque la composition comprend un mélange de polyamides amorphes, au moins l'un des polyamides amorphes, voire même chacun des polyamides amorphes) est le PA 11/MACM.10, le PA 11/PACM.10, le PA 11/MACM.12, le PA 11/PACM.12, le PA 11/MACM.14, le PA 11/PACM.14, le PA 11/MACM.18, le PA 11/PACM.18, le PA 12/MACM.10, le PA 12/PACM.10, le PA 12/MACM.12, le PA 12/PACM.12, le PA 12/MACM.14, le PA 12/PACM.14, le PA 12/MACM.18, le PA 12/PACM.18, le PA 11/PACM.10/MACM.10, le PA 11/PACM.12/MACM.12, le PA 11/PACM.14/MACM.14, le PA 12/PACM.10/MACM.10, le PA 12/PACM.12/MACM.12 ou le PA 12/PACM.14/MACM.14.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif répondant à la formule (diamine en Ca).(diacide en Cb) où la diamine en Ca est aliphatique (notamment telle que définie ci-dessus) et le diacide en Cb est un diacide aliphatique (notamment tel que défini ci-dessus), et
- au moins un motif répondant à la formule (diamine en Ca').(diacide en Cb'), où la diamine en Ca' est choisie parmi l'une des diamines en Ca définies ci-dessus et le diacide en Cb' est choisi parmi l'un des diacides en Cb définis ci-dessus,
sous réserve que (diamine en Ca).(diacide en Cb) soit différent de (diamine en Ca').(diacide en Cb'), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est choisie parmi la décanediamine (a=10) et la dodécanediamine (a=12) et/ou le diacide en Cb est choisi parmi l'acide sébacique (b=10), l'acide dodécanedioïque (b=12), l'acide tetradécanedioïque (b=14) et l'acide octadécanoïque (b=18), et/ou la diamine en Ca' est choisie parmi la décanediamine (a=10) et la dodécanediamine (a=12), PACM et MACM et/ou le diacide en Cb' est choisi parmi l'acide sébacique (b=10), l'acide dodécanedioïque (b=12), l'acide tetradécanedioïque (b=14), l'acide octadécanoïque (b=18), l'acide téréphtalique et l'acide isophtalique. De préférence, le polyamide amorphe (ou lorsque la composition comprend un mélange de polyamides amorphes, au moins l'un des polyamides amorphes, voire même chacun des polyamides amorphes) est le 10.10/MACM.I, le 10.10/PACM.I, le PA 10.10/MACM.I/MACM.T, le 10.10/PACM.I/PACM.T, le 10.12/MACM.I, le 10.12/PACM.I, le PA 10.12/MACM.I/MACM.T, le 10.12/PACM.I/PACM.T, le 12.10/MACM.I, le 12.10/PACM.I, le PA 12.10/MACM.I/MACM.T, le 12.10/PACM.I/PACM.T, le 12.12/MACM.I, le 12.12/PACM.I, le PA 12.12/MACM.I/MACM.T, le 12.12/PACM.I/PACM.T, le 12.14/MACM.I, le 12.14/PACM.I, le PA 12.14/MACM.I/MACM.T, le 12.14/PACM.I/PACM.T, le 10.14/MACM.I, le 10.14/PACM.I, le PA 10.14/MACM.I/MACM.T, le 10.14/PACM.I/PACM.T, le PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18 ou le PA 12.14/PACM.18.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif répondant à la formule (diamine en Ca).(diacide en Cb) où la diamine en Ca est aliphatique (notamment telle que définie ci-dessus) et le diacide en Cb est un diacide aliphatique (notamment tel que défini ci-dessus), et
- au moins un motif répondant à la formule (diamine en Ca').(diacide en Cb'), où la diamine en Ca' est choisie parmi l'une des diamines en Ca cycloaliphatiques définies ci-dessus et le diacide en Cb' est choisi parmi l'un des diacides en Cb aromatiques définis ci-dessus,
le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est choisie parmi la décanediamine (a=10) et la dodécanediamine (a=12) et/ou le diacide en Cb est choisi parmi l'acide sébacique (b=10), l'acide dodécanedioïque (b=12), l'acide tetradécanedioïque (b=14) et l'acide octadécanoïque (b=18), et/ou la diamine en Ca' est choisie parmi la PACM et MACM et/ou le diacide en Cb' est choisi parmi l'acide téréphtalique et l'acide isophtalique. De préférence, le polyamide amorphe (ou lorsque la composition comprend un mélange de polyamides amorphes, au moins l'un des polyamides amorphes, voire même chacun des polyamides amorphes) est le 10.10/MACM.I, le 10.10/PACM.I, le PA 10.10/MACM.I/MACM.T, le 10.10/PACM.I/PACM.T, le 10.12/MACM.I, le 10.12/PACM.I, le PA 10.12/MACM.I/MACM.T, le 10.12/PACM.I/PACM.T, le 12.10/MACM.I, le 12.10/PACM.I, le PA 12.10/MACM.I/MACM.T, le 12.10/PACM.I/PACM.T, le 12.12/MACM.I, le 12.12/PACM.I, le PA 12.12/MACM.I/MACM.T, le 12.12/PACM.I/PACM.T, le 12.14/MACM.I, le 12.14/PACM.I, le PA 12.14/MACM.I/MACM.T, le 12.14/PACM.I/PACM.T, le 10.14/MACM.I, le 10.14/PACM.I, le PA 10.14/MACM.I/MACM.T ou le 10.14/PACM.I/PACM.T.

Dans un mode de réalisation, le polyamide amorphe (ou lorsque la composition comprend un mélange de polyamides amorphes, au moins l'un des polyamides amorphes, voire même chacun des polyamides amorphes) est un copolyamide comprenant :
- au moins un motif répondant à la formule (diamine en Ca).(diacide en Cb) où la diamine en Ca est aliphatique (notamment telle que définie ci-dessus) et le diacide en Cb est un diacide aliphatique (notamment tel que défini ci-dessus), et
- au moins un motif répondant à la formule (diamine en Ca').(diacide en Cb'), où la diamine en Ca' est choisie parmi l'une des diamines en Ca cycloaliphatiques définies ci-dessus et le diacide en Cb' est choisi parmi l'un des diacides en Cb aliphatiques définis ci-dessus,
sous réserve que (diamine en Ca).(diacide en Cb) soit différent de (diamine en Ca').(diacide en Cb'), le polyamide semi-cristallin (ou lorsque la composition comprend un mélange de polyamides semi-cristallins, au moins l'un des polyamides semi-cristallins, voire même chacun des polyamides semi-cristallins) étant choisi parmi l'un quelconque des polyamides définis ci-dessus. Par exemple, la diamine en Ca est choisie parmi la décanediamine (a=10) et la dodécanediamine (a=12) et/ou le diacide en Cb est choisi parmi l'acide sébacique (b=10), l'acide dodécanedioïque (b=12), l'acide tetradécanedioïque (b=14) et l'acide octadécanoïque (b=18), et/ou la diamine en Ca' est choisie parmi la PACM et MACM et/ou le diacide en Cb' est choisi parmi l'acide sébacique (b=10), l'acide dodécanedioïque, l'acide tetradécanedioïque (b=14) et l'acide octadécanoïque (b=18). De préférence, le polyamide amorphe (ou lorsque la composition comprend un mélange de polyamides amorphes, au moins l'un des polyamides amorphes, voire même chacun des polyamides amorphes) est PA 10.10/MACM.10, le PA 10.10/PACM.10, le PA 10.10/MACM.12, le PA 10.10/PACM.12, le PA 10.10/MACM.14, le PA 10.10/PACM.14, le PA 10.10/MACM.18, le PA 10.10/PACM.18, le PA 10.12/MACM.10, le PA 10.12/PACM.10, le PA 10.12/MACM.12, le PA 10.12/PACM.12, le PA 10.12/MACM.14, le PA 10.12/PACM.14, le PA 10.12/MACM.18, le PA 10.12/PACM.18, le PA 12.10/MACM.10, le PA 12.10/PACM.10, le PA 12.10/MACM.12, le PA 12.10/PACM.12, le PA 12.10/MACM.14, le PA 12.10/PACM.14, le PA 12.10/MACM.18, le PA 12.10/PACM.18, le PA 12.12/MACM.10, le PA 12.12/PACM.10, le PA 12.12/MACM.12, le PA 12.12/PACM.12, le PA 12.12/MACM.14, le PA 12.12/PACM.14, le PA 12.12/MACM.18, le PA 12.12/PACM.18, le PA 10.14/PACM.10, le PA 10.14/MACM.12, le PA 10.14/PACM.12, le PA 10.14/MACM.14, le PA 10.14/PACM.14, le PA 10.14/MACM.18, le PA 10.14/PACM.18, le PA 12.14/MACM.10, le PA 12.14/PACM.10, le PA 12.14/MACM.12, le PA 12.14/PACM.12, le PA 12.14/MACM.14, le PA 12.14/PACM.14, le PA 12.14/MACM.18 ou le PA 12.14/PACM.18.

Les polyamides de la gamme Rilsan® CLEAR de la société Arkema peuvent notamment être utilisés.

Dans la composition mise en œuvre dans l'utilisation selon l'invention, le nombre moyen d'atomes de carbone (C) par rapport à l'atome d'azote (N) du polyamide semi-cristallin (ou, lorsque la composition comprend un mélange de polyamides semi-cristallins, d'au moins un des polyamides semi-cristallins, voire même de chacun des polyamides semi-cristallins) peut être supérieur ou égal à 9, de préférence supérieur ou égal à 10, de manière particulièrement préférée supérieur ou égal à 11, le polyamide amorphe (ou lorsque la composition comprend un mélange de polyamides amorphes, au moins l'un des polyamides amorphes, voire même chacun des polyamides amorphes) étant choisi parmi l'un quelconque des polyamides définis ci-dessus, et en particulier choisi parmi les polyamides amorphes des modes de réalisations décrits ci-dessus. Le polyamide semi-cristallin peut notamment être du PA 11, du PA 10.10, du PA 10.12, du PA 12.12, du PA 10.14 ou du PA 12.14, ou, lorsque la composition comprend un mélange de polyamides semi-cristallins, au moins un des polyamides semi-cristallins peut notamment être du PA 11, du PA 10.10, du PA 10.12, du PA 12.12, du PA 10.14 ou du PA 12.14, voire même chacun des polyamides semi-cristallins peut indépendamment être choisi parmi du PA 11, du PA 10.10, du PA 10.12, du PA 12.12, du PA 10.14 ou du PA 12.14. De préférence, le polyamide semi-cristallin est du PA 11, ou, lorsque la composition comprend un mélange de polyamides semi-cristallins, au moins un des polyamides semi-cristallins est du PA 11.

De préférence, le polyamide semi-cristallin de la composition, ou lorsque la composition comprend un mélange de polyamides semi-cristallins, au moins l'un des polyamides semi-cristallins, voire même chacun des polyamides semi-cristallins, est un polyamide semi-cristallin dont le nombre moyen d'atomes de carbone (C) par rapport à l'atome d'azote (N) est égal à 11, notamment du PA 11 ou du PA 10.12, typiquement du PA 11.

Dans la composition mise en œuvre dans l'utilisation selon l'invention, lorsque le polyamide amorphe est le PA MACM.12 (B.12), le polyamide semi-cristallin n'est pas un PA 12. Lorsque la composition comprend un mélange de polyamides amorphes dont l'un d'eux est le PA MACM.12 (B.12), le polyamide semi-cristallin peut être du PA 12 (ou le mélange de polyamide semi-cristallins peut comprendre un PA 12). Dans un mode de réalisation, lorsque la composition comprend un mélange de polyamides amorphes dont l'un d'eux est le PA MACM.12 (B.12), le polyamide semi-cristallin n'est pas un PA 12 ou le mélange de polyamides semi-cristallins est exempt de PA 12.

De préférence, dans la composition mise en œuvre dans l'utilisation selon l'invention, lorsque le polyamide amorphe est un homopolyamide ou lorsque le mélange de polyamides amorphes comprend un homopolyamide, le polyamide semi-cristallin n'est pas un PA 12 ou le mélange de polyamides semi-cristallins est exempt de PA 12.

De manière particulièrement préférée, dans la composition mise en œuvre dans l'utilisation selon l'invention, le polyamide semi-cristallin n'est pas un PA 12 ou le mélange de polyamides semi-cristallins est exempt de PA 12 (quel que soit le polyamide amorphe ou le mélange de polyamides amorphes).

Dans un mode de réalisation, la composition mise en œuvre dans l'utilisation selon l'invention est exempte de PA 12.

Afin d'assurer de bonnes propriétés (flexibilité, tenue à l'éclatement, tenue à la déchirure, rhéologie, morphologie d'alliage, compatibilisation, homogénéité, constance, adhésion) et, en particulier, de bonnes propriétés de résistance aux chocs et aux chocs après vieillissement (notamment vieillissement oxydatif à haute température), il est possible d'ajouter à la composition un modifiant choc de nature élastomère et préférentiellement polaire.

Ainsi, la composition peut comprendre jusqu'à 20% en poids, par rapport au poids total de la composition, d'un modifiant choc constitué par un polymère non rigide présentant un module de flexion inférieur à 100 MPa mesuré selon la norme ISO 178 de 2010.

Ce polymère non rigide est, de préférence, le plus souple possible et présente une température de transition vitreuse Tg la plus basse possible, c'est-à-dire inférieure à 0°C. Ce modifiant choc est au besoin fonctionnalisé chimiquement de façon à pouvoir réagir avec le polyamide amorphe et/ou le polyamide semi-cristallin et à former un alliage compatible avec eux.

Le modifiant choc est, de préférence, constitué d'une ou plusieurs polyoléfines, une partie ou la totalité de celles-ci portant une fonction choisie parmi les fonctions acide carboxylique, anhydride carboxylique, époxyde et toute autre fonction susceptible de réagir chimiquement avec les polyamides, typiquement avec ses bouts de chaîne amine (cas de l'acide carboxylique, l'anhydride carboxylique) ou ses bouts de chaînes acides (cas de l'époxyde, en particulier du méthacrylate de glycidyle). Par exemple, la polyoléfine est choisie parmi : un copolymère d'éthylène et de propylène à caractère élastomère (EPR), un copolymère ethylène-octène, un copolymère éthylène-propylène-diène à caractère élastomère (EPDM) et un copolymère éthylène/(méth)acrylate d'alkyle, par exemple l'EPR greffé anhydride tel l'Exxelor VA1803 d'Exxon, ou le copolymère de polyéthylène, d'acrylate d'éthyle et d'anhydride maléique (coPE/EA/MAH) tel que le Lotader 4700 de la société Arkema.

La composition peut contenir des fibres, en particulier des fibres aramides, des fibres de verre, des fibres de carbone, avantageusement des fibres de verre, et généralement jusqu'à un taux de 50% en poids, par rapport au poids total de la composition.

La composition mise en œuvre dans l'utilisation selon l'invention peut également comprendre des additifs habituels des polyamides, tels que : des colorants, des stabilisants à la lumière (UV) et/ou à la chaleur, des plastifiants, des agents tensio-actifs, des pigments, des azurants optiques, des anti-oxydants, les cires naturelles, des agents de démoulage, des charges ou leurs mélanges.

Les charges envisagées incluent les charges minérales classiques, telles que celles choisies dans le groupe, donné à titre non- limitatif, comprenant le talc, le kaolin, la magnésie, les scories, la silice, le noir de carbone, les nanotubes de carbone, le graphite expansé ou non, l'oxyde de titane.

Les stabilisants usuels utilisés avec des polymères sont des phénols, des phosphites, des absorbeurs UV, des stabilisants du type HALS (Hindered Amine Light Stabiliser), des iodures métalliques. On peut citer l'Irganox 1010, 245, 1098, l'Irgafos 168, 126, le Tinuvin 312, 770, l'Iodide P201 de la société Ciba, le Nylostab S-EED de la société Clariant.

De préférence, les additifs de la composition mise en œuvre dans l'utilisation selon la présente invention peuvent être présents en une quantité inférieure ou égale à 10%, et de préférence inférieure à 5% en poids par rapport au poids de la composition.

Dans un mode de réalisation, la composition est constituée d'un mélange de :
- 50 à 95% en poids, notamment 60 à 90% en poids, de préférence de 65 à 85% en poids d'un polyamide amorphe ou d'un mélange de polyamides amorphes,
- 5 à 50% en poids, notamment 10 à 40% en poids, de préférence de 15 à 35% en poids d'un polyamide semi-cristallin dont le nombre moyen d'atomes de carbone (C) par rapport à l'atome d'azote (N) est supérieur ou égal à 8, ou d'un mélange de polyamides semi-cristallins dans lequel le nombre moyen d'atomes de carbone (C) par rapport à l'atome d'azote (N) de chacun des polyamides semi-cristallins est supérieur ou égal à 8,
   sous réserve que lorsque le polyamide amorphe est le PA MACM.12 (B.12), le polyamide semi-cristallin ne soit pas un PA 12,
- 0 à 10% en poids, notamment 0 à 5% en poids d'un modifiant choc, notamment tels que définis ci-dessus,
- 0 à 10% en poids, notamment 0 à 5% en poids d'additifs, notamment tels que définis ci-dessus, et
- 0 à 50% en poids, notamment de 0 à 30% en poids de fibres, notamment telles que définies ci-dessus.

De préférence, le taux d'absorption d'eau à 23°C dans une atmosphère dont l'humidité relative est de 50% mesuré selon la norme ISO 62 révisée en 2011 de la composition mise en œuvre dans l'utilisation selon l'invention est au moins 10% plus faible, notamment 15% plus faible, voire 20% plus faible, que le taux d'absorption d'eau théorique obtenu par calcul en additionnant les taux d'absorption d'eau mesurés pour chacun des ingrédients de la composition au prorata massique de chacun des ingrédients de la composition.

De préférence, le taux d'absorption d'eau à 23°C dans une atmosphère dont l'humidité relative est de 50% mesuré selon la norme ISO 62 révisée en 2011 de la composition mise en œuvre dans l'utilisation selon l'invention est au moins 20% plus faible, notamment 25% plus faible, voire 30% plus faible, que celui du polyamide amorphe ou du mélange de polyamides amorphes qu'elle contient.

Ci-après est décrit un procédé de préparation de la composition telle que définie ci-dessus. Selon ce procédé, la composition peut être préparée par toute méthode qui rend possible l'obtention d'un mélange homogène contenant la composition mise en œuvre dans l'utilisation selon l'invention, et éventuellement d'autres additifs, tel que l'extrusion à l'état fondu, le compactage, ou encore le malaxeur à rouleau.

Plus particulièrement, la composition mise en œuvre dans l'utilisation selon l'invention peut être préparée par mélange à l'état fondu de tous les ingrédients dans un procédé dit en direct. La composition mise en œuvre dans l'utilisation selon l'invention peut également être préparée par mélange à sec (« dry blend » en anglais). Avantageusement, la composition peut être obtenue sous forme de granulés, généralement par compoundage sur un outil connu de l'homme de l'art tel que : extrudeuse bi vis, comalaxeur, mélangeur interne.

La composition mise en œuvre dans l'utilisation selon l'invention obtenue par le procédé de préparation décrit ci-dessus peut être ensuite transformée pour une utilisation ou une transformation ultérieure connue par l'homme de l'art, notamment par injection, calandrage, extrusion, de préférence par injection. La transformation peut être effectuée directement à partir du mélange à l'état fondu ou à partir du mélange à sec.

La composition mise en œuvre dans l'utilisation selon l'invention est utile pour la préparation d'un article, typiquement par injection, extrusion, coextrusion, multi-injection, de préférence par injection. Le procédé de préparation de la composition mise en œuvre dans l'utilisation selon l'invention peut aussi utiliser une extrudeuse bi-vis alimentant, sans granulation intermédiaire, une presse à injecter ou une extrudeuse selon un dispositif de mise en œuvre connu par l'homme de l'art.

Ci-après est décrit un article façonné, tel que fibre, tissu, film, feuille, jonc, tube, pièce injectée, comprenant la composition telle que définie ci-dessus. Ainsi, la composition mise en œuvre dans l'utilisation selon la présente invention est avantageuse pour la fabrication d'articles, en particulier d'articles ou éléments d'articles de sport, devant notamment présenter à la fois une bonne transparence, une bonne résistance au choc et une bonne endurance aux agressions mécaniques, chimiques, UV, thermiques. Parmi ces articles de sport, on peut citer des éléments de chaussures de sport, des ustensiles de sport tels que des patins à glace ou autres articles de sports d'hiver et d'alpinisme, des fixations de skis, des raquettes, des battes de sport, des planches, des fers à cheval, des palmes, des balles de golf, des véhicules de loisirs, en particulier ceux destinés aux activités par temps froid. On peut également mentionner, d'une manière générale, les articles de loisirs, de bricolage, les outils et équipements de voirie soumis aux agressions climatiques et mécaniques, les articles de protection, tels que les visières des casques, les lunettes, ainsi que les branches de lunettes. On peut citer aussi, à titre d'exemples non limitatifs, les éléments de voiture, tels que protège-phares, rétroviseurs, petites pièces de voitures tout terrain, les réservoirs, en particulier, de cyclomoteurs, motos, scooters, soumis aux agressions mécaniques et chimiques, la visserie, les articles cosmétiques soumis aux agressions mécaniques et chimiques, les bâtons de rouges à lèvres, les manomètres, les éléments de protection esthétiques tels que les bouteilles de gaz. On peut également mentionner les objets ou pièces d'objets pour l'électronique nécessitant un respect des côtes, par exemple des pièces de téléphones portables, d'ordinateurs, de tablettes...

L'invention concerne l'utilisation d'un polyamide semi-cristallin dont le nombre moyen d'atomes de carbone (C) par rapport à l'atome d'azote (N) est supérieur ou égal à 8, ou d'un mélange de polyamides semi-cristallins dans lequel le nombre moyen d'atomes de carbone (C) par rapport à l'atome d'azote (N) de chacun des polyamides semi-cristallins est supérieur ou égal à 8, dans une composition comprenant un polyamide amorphe ou un mélange de polyamides amorphes pour améliorer la stabilité dimensionnelle de ladite composition en diminuant son taux d'absorption en eau, sous réserve que, lorsque le polyamide amorphe est le PA MACM.12, le polyamide semi-cristallin ne soit pas un PA 12.

Dans cette utilisation, lorsque le polyamide amorphe est le PA MACM.12 (B.12), le polyamide semi-cristallin n'est pas un PA 12. Lorsque la composition comprend un mélange de polyamides amorphes dont l'un d'eux est le PA MACM.12 (B.12), le polyamide semi-cristallin utilisé peut être du PA 12 (ou le mélange de polyamide semi-cristallins utilisé peut comprendre un PA 12). Dans un mode de réalisation, lorsque la composition comprend un mélange de polyamides amorphes dont l'un d'eux est le PA MACM.12 (B.12), le polyamide semi-cristallin utilisé n'est pas un PA 12 ou le mélange de polyamides semi-cristallins utilisé est exempt de PA 12.

De préférence, dans cette utilisation, lorsque le polyamide amorphe est un homopolyamide ou lorsque le mélange de polyamides amorphes comprend un homopolyamide, le polyamide semi-cristallin utilisé n'est pas un PA 12 ou le mélange de polyamides semi-cristallins utilisé est exempt de PA 12.

De manière particulièrement préférée, dans cette utilisation, le polyamide semi-cristallin utilisé n'est pas un PA 12 ou le mélange de polyamides semi-cristallins utilisé est exempt de PA 12 (quel que soit le polyamide amorphe ou le mélange de polyamides amorphes).

L'amélioration de la stabilité dimensionnelle est notamment observée pour une composition à une température de -10°C à Tg - 20°C, où Tg est la température de transition vitreuse de la composition mesurée par DSC selon la norme ISO 11357-1 de 2009 et ISO 11357-2 de 2013 à une vitesse de chauffe de 20K/min, de préférence dans la gamme de température d'utilisation de la pièce, par exemple à température ambiante (23°C).

Cette amélioration de la stabilité dimensionnelle peut notamment être mise en évidence en comparant :
- le taux d'absorption en eau τ_{composition selon l'invention} à une température donnée et à un taux d'humidité relative donné d'une composition comprenant un polyamide amorphe ou un mélange de polyamides amorphes et un polyamide semi-cristallin dont le nombre moyen d'atomes de carbone (C) par rapport à l'atome d'azote (N) est supérieur ou égal à 8 ou un mélange de polyamides semi-cristallins dans lequel le nombre moyen d'atomes de carbone (C) par rapport à l'atome d'azote (N) de chacun des polyamides semi-cristallins est supérieur ou égal à 8, et
- le taux d'absorption en eau τₐₘₒᵣₚₕₑ à la même température et au même taux d'humidité du polyamide amorphe ou du mélange de polyamides amorphes présent dans ladite composition,
et en observant τ_{composition selon l'invention} < τₐₘₒᵣₚₕₑ.
Typiquement, τ_{composition selon l'invention} à 23°C dans l'eau mesuré selon la norme ISO 62 révisée en 2011 est au moins 25% plus faible, notamment 30% plus faible, voire 35% plus faible, que τₐₘₒᵣₚₕₑ.
De même, τ_{composition selon l'invention} à 23°C dans une atmosphère dont l'humidité relative est de 50% mesuré selon la norme ISO 62 révisée en 2011 est au moins 35% plus faible, notamment 40% plus faible que τₐₘₒᵣₚₕₑ.
ou bien en comparant :
- le taux d'absorption en eau τ_{composition selon l'invention} à une température donnée et à un taux d'humidité relative donné d'une composition comprenant un polyamide amorphe ou un mélange de polyamides amorphes et un polyamide semi-cristallin dont le nombre moyen d'atomes de carbone (C) par rapport à l'atome d'azote (N) est supérieur ou égal à 8 ou un mélange de polyamides semi-cristallins dans lequel le nombre moyen d'atomes de carbone (C) par rapport à l'atome d'azote (N) de chacun des polyamides semi-cristallins est supérieur ou égal à 8, et
- le taux d'absorption en eau τ_{théorique} à la même température et au même taux d'humidité obtenu par calcul en additionnant les taux d'absorption d'eau mesurés pour chacun des ingrédients de ladite composition au prorata massique de chacun des ingrédients de ladite composition,
et en observant τ_{composition selon l'invention} < τ_{théorique}.
Typiquement, τ_{composition selon l'invention} à 23°C dans l'eau mesuré selon la norme ISO 62 révisée en 2011 est au moins 10% plus faible, notamment 15% plus faible, voire 20% plus faible, que τ_{théorique}.
De même, τ_{composition selon l'invention} à 23°C dans une atmosphère dont l'humidité relative est de 50% mesuré selon la norme ISO 62 révisée en 2011 est au moins 20% plus faible,
notamment 25% plus faible que τ_{théorique}.

Le taux d'absorption en eau peut par exemple être mesuré dans une atmosphère dont l'humidité relative est de 50%, ou dans de l'eau, selon la norme ISO 62 révisée en 2011.

Les modes de réalisation décrits ci-dessus (polyamides, notamment nombre moyen d'atomes de carbone (C) par rapport à l'atome d'azote (N) du polyamide semi-cristallin, proportions, autres ingrédients dans la composition...) sont bien sûr applicables.

L'invention concerne également une méthode d'amélioration de la stabilité dimensionnelle d'une composition comprenant un polyamide amorphe ou un mélange de polyamides amorphes en diminuant le taux d'absorption en eau de ladite composition comprenant une étape consistant à ajouter à ladite composition un polyamide semi-cristallin dont le nombre moyen d'atomes de carbone (C) par rapport à l'atome d'azote (N) est supérieur ou égal à 8, ou un mélange de polyamides semi-cristallins dans lequel le nombre moyen d'atomes de carbone (C) par rapport à l'atome d'azote (N) de chacun des polyamides semi-cristallins est supérieur ou égal à 8, sous réserve que, lorsque le polyamide amorphe est le PA MACM.12, le polyamide semi-cristallin ne soit pas un PA 12.

L'invention concerne l'utilisation d'un polyamide semi-cristallin dont le nombre moyen d'atomes de carbone (C) par rapport à l'atome d'azote (N) est supérieur ou égal à 8, ou d'un mélange de polyamides semi-cristallins dans lequel le nombre moyen d'atomes de carbone (C) par rapport à l'atome d'azote (N) de chacun des polyamides semi-cristallins est supérieur ou égal à 8, dans une composition comprenant un polyamide amorphe ou un mélange de polyamides amorphes pour diminuer le taux d'absorption en eau de ladite composition, sous réserve que, lorsque le polyamide amorphe est le PA MACM.12, le polyamide semi-cristallin ne soit pas un PA 12.

De préférence, dans cette utilisation, lorsque le polyamide amorphe est un homopolyamide, le polyamide semi-cristallin n'est pas un PA 12.

De manière particulièrement préférée, dans cette utilisation, le polyamide semi-cristallin n'est pas un PA 12 (quel que soit le polyamide amorphe).

La diminution du taux d'absorption en eau est notamment observée pour une composition à une température de -10°C à Tg - 20°C (où Tg est la température de transition vitreuse de la composition mesurée par DSC selon la norme ISO 11357-1 de 2009 et ISO 11357-2 de 2013 à une vitesse de chauffe de 20K/min), de préférence à température ambiante (23°C).

Les modes de réalisation décrits ci-dessus (polyamides, proportions, autres ingrédients dans la composition...) sont bien sûr applicables.

L'invention concerne également une méthode de diminution du taux d'absorption en eau d'une composition comprenant un polyamide amorphe ou un mélange de polyamides amorphes comprenant une étape consistant à ajouter à ladite composition un polyamide semi-cristallin dont le nombre moyen d'atomes de carbone (C) par rapport à l'atome d'azote (N) est supérieur ou égal à 8, ou un mélange de polyamides semi-cristallins dans lequel le nombre moyen d'atomes de carbone (C) par rapport à l'atome d'azote (N) de chacun des polyamides semi-cristallins est supérieur ou égal à 8, sous réserve que, lorsque le polyamide amorphe est le PA MACM.12, le polyamide semi-cristallin ne soit pas un PA 12.

L'invention est illustrée avec les exemples qui suivent, qui sont fournis à titre non limitatif.

Dans les exemples ci-dessous, des plaques de 100*100*1mm³ ont été préparées par injection de composition polymérique obtenue suite à une phase de compoundage.

Les taux d'absorption d'eau à 23°C de compositions polymériques ont été mesurés, soit dans une atmosphère dont le taux d'humidité relative (RH) était de 50%, soit dans l'eau, en suivant la méthode décrite dans la norme ISO 62 révisée en 2011. Les taux d'absorption d'eau fournis sont à l'équilibre. L'absorption d'eau a été suivie par des pesées successives jusqu'à l'atteinte de la saturation.

Pour les compositions polymériques, les tableaux ci-dessous font apparaitre le taux d'absorption d'eau mesuré et le taux d'absorption d'eau théorique obtenu par calcul en additionnant les taux d'absorption d'eau mesurés pour chacun des polymères de la composition polymérique au prorata massique de chacun des polymères de la composition polymérique.

Ainsi, le taux d'absorption d'eau théorique d'une composition polymérique comprenant x% en poids d'un polymère X dont le taux d'absorption d'eau est Tₓ et y% en poids d'un polymère Y dont le taux d'absorption d'eau est T_{y} est xTₓ + yT_{y}.

Tous les polymères proviennent de la société Arkema.

Les proportions sont en poids par rapport au poids total de la composition.

### Exemple comparatif 1 : Orgalloy® (composition polymérique comprenant 64% de PA6 et un mélange de polyoléfine fonctionnelle (POF) et de polyoléfine non fonctionnelle)

Les taux d'absorption en eau sont fournis au tableau 1.

**Tableau 1 : taux d'absorption en eau**

| | Absorption d'eau, 23°C dans l'eau | | | Absorption d'eau, 23°C à 50% RH | | |
|---|---|---|---|---|---|---|
| | mesurée | théorique | écart mesure/théorie | mesurée | théorique | écart mesure/théorie |
| PA 6 | 9,5% | NA | NA | 3% | NA | NA |
| Orgalloy® | 6% | 6,1% | 2% | 1,8% | 1,9% | 5% |

| | | | | | | |
|---|---|---|---|---|---|---|
| NA : non applicable | | | | | | |

Les taux d'absorption d'eau théorique et mesuré de l'Orgalloy sont sensiblement identiques, comme attendu. Chacun des polymères de la composition polymérique absorbe de l'eau sans être influencé par son environnement.

### Exemple comparatif 2 : composition polymérique comprenant du PA11 et 8% de fibres de verre

Les taux d'absorption en eau sont fournis au tableau 2.

**Tableau 2 : taux d'absorption en eau**

| | Absorption d'eau, 23°C dans l'eau | | |
|---|---|---|---|
| | mesurée | théorique | écart mesure/théorie |
| PA 11 + 8% fibres de verre | 1,6% | 1,66% | 4% |

Les taux d'absorption d'eau théorique et mesuré d'une composition polymérique comprenant du PA11 et 8% de fibres de verre sont sensiblement identiques, comme attendu. Chacun des ingrédients de la composition polymérique absorbe de l'eau sans être influencé par son environnement.

### Exemple 1 : mélange de PA 12/MACM.I/MACM.T et de PA11

Les taux d'absorption en eau sont fournis aux tableaux 3 et 4.

**Tableau 3 : taux d'absorption en eau à 23°C à 50% RH**

| | Absorption d'eau, 23°C à 50% RH | | | |
|---|---|---|---|---|
| | mesurée | théorique (=τ_{théorique}) | écart τ_{composition selon l'invention} / τ_{théorique} | écart τ_{composition selon l'invention} / τₐₘₒᵣₚₕₑ |
| 12/MACM.I/MACM.T | 1,4% (=τₐₘₒᵣₚₕₑ) | NA | NA | 0% |
| 70% 12/MACM.I/MACM.T + 30% de PA11 | 0,9% (=τ_{composition selon l'invention}) | 1,2% | 25% | 36% |
| 60% 12/MACM.I/MACM.T + 25% de PA11 + 15% de fibres de verre | 0,8% (=τ_{composition selon l'invention}) | 1,0% | 20% | 43% |
| 68% 12/MACM.I/MACM.T + 17% de PA11 + 15% de fibres de verre | 0,8% (=τ_{composition selon l'invention}) | 1,1% | 27% | 43% |

| | | | | |
|---|---|---|---|---|
| NA : non applicable | | | | |

**Tableau 4 : taux d'absorption en eau dans l'eau à 50% RH**

| | Absorption d'eau, 23°C dans l'eau | | | |
|---|---|---|---|---|
| | mesurée | théorique (=τ_{théorique}) | écart τ_{composition selon l'invention}/ τ_{théorique} | écart τ_{composition selon l'invention} / τₐₘₒᵣₚₕₑ |
| 12/MACM.I/MACM.T | 3,3% (=τₐₘₒᵣₚₕₑ) | NA | NA | 0% |
| 70% 12/MACM.I/MACM.T + 30% de PA11 | 2,4% (=τ_{composition selon l'invention}) | 2,9% | 17% | 27% |
| 60% 12/MACM.I/MACM.T + 25% de PA11 + 15% de fibres de verre | 2,0% (=τ_{composition selon l'invention}) | 2,5% | 20% | 39% |
| 68% 12/MACM.I/MACM.T + 17% de PA11 + 15% de fibres de verre | 2,1% (=τ_{composition selon l'invention}) | 2,6% | 19% | 36% |

Les compositions polymériques comprenant un PA amorphe (12/MACM.I/MACM.T), un polyamide semi-cristallin à longue chaîne (PA 11) et éventuellement des fibres de verre absorbent moins d'eau que ne le prévoit le calcul (20 à 27% de moins dans une atmosphère à 50% RH et 17 à 20% de moins dans l'eau).

De même, les compositions polymériques comprenant un PA amorphe (12/MACM.I/MACM.T), un polyamide semi-cristallin à longue chaîne (PA 11) et éventuellement des fibres de verre absorbent moins d'eau que le 12/MACM.I/MACM.T (36 à 43% dans une atmosphère à 50% RH et 27 à 36% de moins dans l'eau).

La stabilité dimensionnelle de ces compositions polymériques sera donc améliorée par rapport au PA amorphe (12/MACM.I/MACM.T) et significativement supérieure à celle attendue.

### Exemple 2 : mélange de PA 12/MACM.I/MACM.T, de PA 11/MACM.10 et de PA11

Les taux d'absorption en eau sont fournis au tableau 5.

**Tableau 5 : taux d'absorption en eau**

| | Absorption d'eau, 23°C à 50% RH | | |
|---|---|---|---|
| | mesurée (=τ_{composition selon l'invention}) | théorique (=τ_{théorique}) | écart τ_{composition selon l'invention}/ τ_{théorique} |
| 37,8% 12/MACM.I/MACM.T + 28% 11/MACM.10 + 16,9% PA11 + 2% Renol Blue + 15% de fibres de verre (S-2 de AGY) + 0,1% d'irganox + 0,2% d'irgafos 168 | 0,8% | 1,06% | 25% |
| 38,1% 12/MACM.I/MACM.T + 23,4 % 11/MACM.10 + 21,2% PA11 + 2% Renol Blue + 15% de fibres de verre (S-2 de AGY) + 0,1% d'irganox + 0,2% d'irgafos 168 | 0,8% | 1,02% | 22% |

Les compositions polymériques comprenant deux PA amorphes (12/MACM.I/MACM.T et 11/MACM.10) et un polyamide semi-cristallin à longue chaîne (PA11) absorbent moins d'eau que ne le prévoit le calcul (22 à 25% de moins dans une atmosphère à 50% RH).

La stabilité dimensionnelle de ces compositions polymériques sera donc améliorée et significativement supérieure à celle attendue.

## Revendications

1. Utilisation d'un polyamide semi-cristallin, dont le nombre moyen d'atomes de carbone (C) par rapport à l'atome d'azote (N) est supérieur ou égal à 8, ou d'un mélange de polyamides semi-cristallins dans lequel le nombre moyen d'atomes de carbone (C) par rapport à l'atome d'azote (N) de chacun des polyamides semi-cristallins est supérieur ou égal à 8, dans une composition comprenant un polyamide amorphe ou un mélange de polyamides amorphes pour améliorer la stabilité dimensionnelle en diminuant le taux d'absorption en eau mesuré selon la norme ISO 62 révisée en 2011 de ladite composition, sous réserve que, lorsque le polyamide amorphe est le PA MACM.12, le polyamide semi-cristallin ne soit pas un PA 12.

2. Utilisation selon la revendication 1, dans laquelle la composition comprend :
- 50 à 95% en poids, de préférence de 60 à 90% en poids, du polyamide amorphe ou du mélange de polyamides amorphes, et
- 5 à 50% en poids, de préférence de 10 à 40% en poids, du polyamide semi-cristallin ou du mélange de polyamides semi-cristallins.

3. Utilisation selon l'une quelconque des revendications 1 à 2, dans laquelle :
- le polyamide semi-cristallin ou au moins un polyamide semi-cristallin du mélange de polyamides semi-cristallins, et/ou
- le polymère amorphe ou au moins un polyamide amorphe du mélange de polyamides amorphe,
comprend un motif obtenu à partir d'un lactame, notamment choisi parmi la pyrrolidinone, la piperidinone, le caprolactame, l'énantholactame, le caprylolactame, le pelargolactame, le décanolactame, l'undécanolactame, et le laurolactame.

4. Utilisation selon l'une quelconque des revendications 1 à 3, dans laquelle :
- le polyamide semi-cristallin ou au moins un polyamide semi-cristallin du mélange de polyamides semi-cristallins, et/ou
- le polymère amorphe ou au moins un polyamide amorphe du mélange de polyamides amorphe,
comprend un motif obtenu à partir d'un aminoacide, notamment choisi parmi l'acide 9-aminononanoïque, l'acide 10-aminodécanoïque, l'acide 12-aminododécanoïque, l'acide 11- aminoundécanoïque et l'acide N-heptyl-11-aminoundécanoïque.

5. Utilisation selon l'une quelconque des revendications 1 à 4, dans laquelle :
- le polyamide semi-cristallin ou au moins un polyamide semi-cristallin du mélange de polyamides semi-cristallins, et/ou
- le polymère amorphe ou au moins un polyamide amorphe du mélange de polyamides amorphe,
comprend un motif répondant à la formule (diamine en Ca).(diacide en Cb), avec a représentant le nombre d'atomes de carbones de la diamine et b représentant le nombre d'atomes de carbones du diacide, a et b étant chacun indépendamment compris entre 4 et 36, la diamine en Ca étant notamment aliphatique, cycloaliphatique ou alkylaromatique et/ou le diacide en Cb étant notamment aliphatique, cycloaliphatique ou aromatique.

6. Utilisation selon la revendication 5, dans laquelle la diamine en Ca est :
- soit une diamine linéaire et aliphatique de formule :
H₂N-(CH₂)ₐ-NH₂
dans laquelle a est un nombre entier compris entre 4 et 36,
- soit une diamine cycloaliphatique de formule : 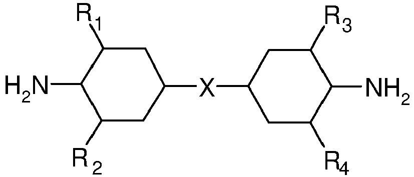 dans laquelle :
- R₁, R₂, R₃ et R₄ représentent indépendamment un groupe choisi parmi un atome d'hydrogène ou un alkyle de 1 à 6 atomes de carbone et
- X représente soit une liaison simple, soit un groupement divalent constitué:
- d'une chaîne aliphatique linéaire ou ramifiée comprenant de 1 à 10 atomes de carbone, éventuellement substituée par des groupements cycloaliphatiques ou aromatiques de 6 à 8 atomes de carbone,
- d'un groupement cycloaliphatique de 6 à 12 atomes de carbone.

7. Utilisation selon la revendication 5, dans laquelle la diamine en Ca est choisie parmi :
- une diamine en Ca linéaire et aliphatique choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécanediamine (a=18), l'eicosanediamine (a=20), la docosanediamine (a=22) et les diamines obtenues à partir d'acides gras,
- une diamine cycloaliphatique choisie parmi la bis(3,5-dialkyl-4-aminocyclohexyl)méthane, la bis(3,5-dialkyl-4-aminocyclohexyl) éthane, la bis(3,5-dialkyl-4-aminocyclohexyl)propane, la bis(3,5- dialkyl-4-aminocyclohexyl)butane, la bis-(3-méthyl-4-aminocyclohexyl)-méthane, la p-bis(aminocyclohexyl)méthane et la bis(aminocyclohexyl)propane, et
- une diamine alkylaromatique choisie parmi la 1,3-xylylène diamine et la 1,4-xylylène diamine.

8. Utilisation selon l'une quelconque des revendications 5 à 7, dans laquelle le diacide en Cb est choisi parmi :
- un diacide aliphatique linéaire choisi parmi l'acide succinique (b=4), ), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanoïque (b=18), l'acide octadécènedioïque (b=18), l'acide eicosanedioïque (b=20), l'acide docosanedioïque (b=22) et les dimères d'acides gras contenant 36 carbones, et
- un diacide aromatique choisi parmi l'acide téréphtalique, l'acide isophtalique, et le diacide naphtalénique.

9. Utilisation selon l'une quelconque des revendications 1 à 8, dans laquelle le polyamide semi-cristallin, ou au moins un polyamide semi-cristallin du mélange de polyamides semi-cristallins, est un homopolyamide.

10. Utilisation selon l'une quelconque des revendications 1 à 9, dans laquelle le nombre moyen d'atomes de carbone (C) par rapport à l'atome d'azote (N) du polyamide semi-cristallin, ou au moins d'un polyamide semi-cristallin du mélange de polyamides semi-cristallins, est supérieur ou égal à 9, de préférence supérieur ou égal à 10, de manière particulièrement préféré supérieur ou égal à 11, notamment égal à 11.

11. Utilisation selon la revendication 10, dans laquelle le polyamide semi-cristallin, ou au moins un polyamide semi-cristallin du mélange de polyamides semi-cristallins, est du PA11.

12. Utilisation selon l'une quelconque des revendications précédentes, dans laquelle la composition présente un taux d'absorption d'eau à 23°C dans l'eau mesuré selon la norme ISO 62 révisée en 2011 au moins 25% plus faible, notamment 30% plus faible, voire 35% plus faible, que celui du polyamide amorphe ou du mélange de polyamides amorphes qu'elle contient.

13. Utilisation selon l'une quelconque des revendications précédentes, dans laquelle la composition présente un taux d'absorption d'eau à 23°C dans une atmosphère dont l'humidité relative est de 50% mesuré selon la norme ISO 62 révisée en 2011 au moins 35% plus faible, notamment 40% plus faible que celui du polyamide amorphe ou du mélange de polyamides amorphes qu'elle contient.

14. Utilisation selon l'une quelconque des revendications précédentes, dans laquelle la composition présente un taux d'absorption d'eau à 23°C dans l'eau mesuré selon la norme ISO 62 révisée en 2011 au moins 10% plus faible, notamment 15% plus faible, voire 20% plus faible, que le taux d'absorption d'eau théorique obtenu par calcul en additionnant les taux d'absorption d'eau mesurés pour chacun des ingrédients de la composition au prorata massique de chacun des ingrédients de la composition.

15. Utilisation selon l'une quelconque des revendications précédentes, dans laquelle la composition présente un taux d'absorption d'eau à 23°C dans une atmosphère dont l'humidité relative est de 50% mesuré selon la norme ISO 62 révisée en 2011 au moins 20% plus faible, notamment 25% plus faible, que le taux d'absorption d'eau théorique obtenu par calcul en additionnant les taux d'absorption d'eau mesurés pour chacun des ingrédients de la composition au prorata massique de chacun des ingrédients de la composition.

## Patentansprüche

1. Verwendung eines semi-kristallinen Polyamids, wovon die durchschnittliche Kohlenstoff(C)atomanzahl in Bezug auf das Stickstoff(N)atom größer oder gleich 8 ist, oder einer Mischung von semi-kristallinen Polyamiden, in der die durchschnittliche Kohlenstoff(C)atomanzahl in Bezug auf das Stickstoff(N)atom von jedem der semi-kristallinen Polyamide größer oder gleich 8 ist, in einer Zusammensetzung, welche ein amorphes Polyamid oder eine Mischung aus amorphen Polyamiden aufweist, um die Dimensionsstabilität zu verbessern mittels Verringerns der Wasseraufnahme, die gemessen ist gemäß der Norm ISO 62, welche 2011 revidiert wurde, der besagten Zusammensetzung, vorausgesetzt, dass, wenn das amorphe Polyamid das PA MACM.12 ist, das semi-kristalline Polyamid nicht ein PA 12 ist.

2. Verwendung gemäß Anspruch 1, wobei die Zusammensetzung aufweist:
- 50 bis 95 Gew.-%, vorzugsweise 60 bis 90 Gew.-%, des amorphen Polyamids oder der Mischung von amorphen Polyamiden und/oder
- 5 bis 50 Gew.-%, vorzugsweise 10 bis 40 Gew.-%, des semi-kristallinen Polyamids oder der Mischung von semi-kristallinen Polyamiden.

3. Verwendung gemäß irgendeinem der Ansprüche 1 bis 2, wobei:
- das semi-kristalline Polyamid oder wenigstens ein semi-kristallines Polyamid der Mischung von semi-kristallinen Polyamiden und/oder
- das amorphe Polymer oder wenigstens ein amorphes Polyamid der Mischung von amorphen Polyamiden,
ein Motiv aufweist, das erlangt ist ausgehend von einem Lactam, insbesondere ausgewählt aus dem Pyrrolidinon, dem Piperidinon, dem Caprolactam, dem Enantholactam, dem Caprylolactam, dem Pelargolactam, dem Decanolactam, dem Undecanlactam und dem Laurolactam.

4. Verwendung gemäß irgendeinem der Ansprüche 1 bis 3, wobei:
- das semi-kristalline Polyamid oder wenigstens ein semi-kristallines Polyamid der Mischung von semi-kristallinen Polyamiden und/oder
- das amorphe Polymer oder wenigstens ein amorphes Polyamid der Mischung von amorphen Polyamiden
ein Motiv aufweist, das erlangt ist ausgehend von einer Aminosäure, insbesondere ausgewählt aus der 9-Aminononansäure, der 10-Aminodecansäure, der 12-Aminododecansäure, der 11-Aminoundecansäure und der N-Heptyl-11-aminoundecansäure.

5. Verwendung gemäß irgendeinem der Ansprüche 1 bis 4, wobei:
- das semi-kristalline Polyamid oder wenigstens ein semi-kristallines Polyamid der Mischung von semi-kristallinen Polyamiden und/oder
- das amorphe Polymer oder wenigstens ein amorphes Polyamid der Mischung von amorphen Polyamiden
ein Motiv der Formel (Ca-Diamin).(Cb-Diacid) aufweist, wobei a die Anzahl an Kohlenstoffatomen des Diamins darstellt und b die Anzahl an Kohlenstoffatomen des Diacids darstellt, wobei a und b jeweils unabhängig voneinander zwischen 4 und 36 liegen, das Ca-Diamin insbesondere aliphatisch, cycloaliphatisch oder alkylaromatisch ist und/oder das Cb-Diacid insbesondere aliphatisch, cycloaliphatisch oder aromatisch ist.

6. Verwendung gemäß Anspruch 5, wobei das Ca-Diamin ist:
- entweder ein lineares und aliphatisches Diamin der Formel:
H₂N-(CH₂)ₐ-NH₂
wobei a eine ganze Zahl zwischen 4 und 36 ist,
- oder ein cycloaliphatisches Diamin der Formel: 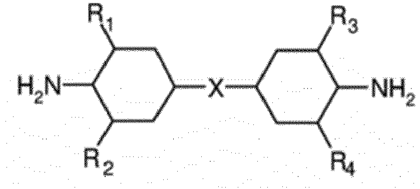 wobei:
∘ R₁, R₂, R₃ und R₄ unabhängig voneinander eine Gruppe darstellen, ausgewählt aus einem Wasserstoffatom oder einem Alkyl mit 1 bis 6 Kohlenstoffatomen und
∘ X entweder eine Einfachbindung oder eine divalente Gruppe darstellt, gebildet aus:
▪ einer aliphatischen, linearen oder verzweigten Kette, welche 1 bis 10 Kohlenstoffatome aufweist, eventuell substituiert durch cycloaliphatische oder aromatische Gruppen mit 6 bis 8 Kohlenstoffatomen,
▪ einer cycloaliphatischen Gruppe mit 6 bis 12 Kohlenstoffatomen.

7. Verwendung gemäß Anspruch 5, wobei das Ca-Diamin ausgewählt ist aus:
- einem linearen und aliphatischen Ca-Diamin ausgewählt aus dem Butandiamin (a=4), dem Pentandiamin (a=5), dem Hexandiamin (a=6), dem Heptandiamin (a=7), dem Octandiamin (a=8), dem Nonandiamin (a=9), dem Decandiamin (a=10), dem Undecandiamin (a=11), dem Dodecandiamin (a=12), dem Tridecandiamin (a=13), dem Tetradecandiamin (d=14), dem Hexadecandiamin (a=16), dem Octadecandiamin (a=18), dem Octadecandiamin (a=18), dem Eicosandiamin (a=20), dem Docosandiamin (a=22) und den Diaminen, die ausgehend von Fettsäuren erlangt sind,
- einem cycloaliphatischen Diamin ausgewählt aus dem bis-(3,5-Dialkyl-4-aminocyclohexyl)methan, dem bis(3,5-Dialkyl-4-aminocyclohexyl)ethan, dem bis(3,5-Dialkyl-4-aminocyclohexyl)propan, dem bis(3,5-Dialkyl-4-aminocyclohexyl)butan, dem bis-(3-Methyl-4-aminocyclohexyl)methan, dem p-bis(Aminocyclohexyl)methan und dem bis(Aminocyclohexyl)propan und
- einem alkylaromatischen Diamin ausgewählt aus dem 1,3-Xylylendiamin und dem 1,4-Xylylendiamin.

8. Verwendung gemäß irgendeinem der Ansprüche 5 bis 7, wobei das Cb-Diacid ausgewählt ist aus:
- einem aliphatischen, linearen Diacid ausgewählt aus der Bernsteinsäure (b=4), der Pentandisäure (b=5), der Adipinsäure (b=6), der Heptandisäure (b=7), der Octandisäure (b=8), der Azelainsäure (b=9), der Sebacinsäure (b=10), der Undecandisäure (b=11), der Dodecansisäure (b=12), der Brassylsäure (b=13), der Tetradecandisäure (b=14), der Hexadecandisäure (b=16), der Octadecandisäure (b=18), der Octadecandisäure (b=18), der Eicosandisäure (b=20), der Docosandisäure (b=22) und den Fettsäuredimeren, welche 36 Kohlenstoffatome umfassen, und
- einem aromatischen Diacid ausgewählt aus der Terephthalsäure, der Isopthalsäure und der Naphthalindisäure.

9. Verwendung gemäß irgendeinem der Ansprüche 1 bis 8, wobei das semi-kristalline Polyamid oder wenigstens ein semi-kristallines Polyamid der Mischung von semi-kristallinen Polyamiden ein Homopolyamid ist.

10. Verwendung gemäß irgendeinem der Ansprüche 1 bis 9, wobei die durchschnittliche Kohlenstoff(C)atomanzahl mit Bezug auf das Stickstoff(N)atom des semi-kristallinen Polyamids oder des wenigstens einen semi-kristallinen Polyamids der Mischung von semi-kristallinen Polyamiden größer oder gleich 9 ist, vorzugsweise größer oder gleich 10, besonders bevorzugt größer oder gleich 11, insbesondere gleich 11.

11. Verwendung gemäß Anspruch 10, wobei das semi-kristalline Polyamid oder wenigstens ein semi-kristallines Polyamid der Mischung von semi-kristallinen Polyamiden PA11 ist.

12. Verwendung gemäß irgendeinem der vorangegangenen Ansprüche, wobei die Zusammensetzung eine wenigstens 25% geringere, insbesondere 30% geringere, sogar 35% geringere Wasseraufnahme bei 23 °C in Wasser, gemessen gemäß der Norm ISO 62, welche 2011 revidiert wurde, aufweist als die des amorphen Polyamids oder der Mischung von amorphen Polyamiden, die sie enthält.

13. Verwendung gemäß irgendeinem der vorangegangenen Ansprüche, wobei die Zusammensetzung eine wenigstens 35% geringere, insbesondere 40% geringere Wasseraufnahme bei 23 °C in einer Atmosphäre, in der die relative Feuchtigkeit 50% ist, gemessen gemäß der Norm ISO 62, welche 2011 revidiert wurde, aufweist als die des amorphen Polyamids oder der Mischung von amorphen Polyamiden, die sie enthält.

14. Verfahren gemäß irgendeinem der vorangegangenen Ansprüche, wobei die Zusammensetzung eine 10% geringere, insbesondere 15% geringere, sogar 20% geringere Wasseraufnahme bei 23 °C in Wasser, gemessen gemäß der Norm ISO 62, welche 2011 revidiert wurde, aufweist als die theoretische Wasseraufnahme, die durch Berechnen erlangt wird mittels Addierens der Wasseraufnahmen, die für jeden der Inhaltsstoffe der Zusammensetzung gemessen wurden, im Massenverhältnis zu jedem der Inhaltsstoffe der Zusammensetzung.

15. Verwendung gemäß irgendeinem der vorangegangenen Ansprüche, wobei die Zusammensetzung eine wenigstens 20% geringere, insbesondere 25% geringere Wasseraufnahme bei 23 °C in einer Atmosphäre, in der die relative Feuchtigkeit 50% ist, gemessen gemäß der Norm ISO 62, welche 2011 revidiert wurde, aufweist als die theoretische Wasseraufnahme, die durch Berechnen erlangt wird mittels Addierens der Wasseraufnahmen, die für jeden der Inhaltsstoffe der Zusammensetzung gemessen wurden, im Massenverhältnis zu jedem der Inhaltsstoffe der Zusammensetzung.

## Claims

1. Use of a semi-crystalline polyamide, for which the average number of carbon atoms (C) relatively to the nitrogen atom (N) is greater than or equal to 8, or of a mixture of semi-crystalline polyamides wherein the average number of carbon atoms (C) relatively to the nitrogen atom (N) of each of the semi-crystalline polyamides is greater than or equal to 8, in a composition comprising an amorphous polyamide or a mixture of amorphous polyamides for improving the dimensional stability by reducing the water absorption rate measured according to the ISO 62 standard revised in 2011 of said composition, provided that, when the amorphous polyamide is PA MACM.12, the semi-crystalline polyamide is not a PA 12.

2. The use according to claim 1, wherein the composition comprises:
- 50 to 95% by weight, preferably from 60 to 90% by weight, of the amorphous polyamide or of the mixture of amorphous polyamides, and
- 5 to 50% by weight, preferably from 10 to 40% by weight, of the semi-crystalline polyamide or of the mixture of semi-crystalline polyamides.

3. The use according to any of claims 1 to 2, wherein:
- the semi-crystalline polyamide or at least one semi-crystalline polyamide of the mixture of semi-crystalline polyamides, and/or
- the amorphous polymer or at least one amorphous polyamide of the mixture of amorphous polyamides,
comprises a unit obtained from a lactam, notably selected from among pyrrolidinone, piperidinone, caprolactam, enantholactam, caprylolactam, pelargolactam, decanolactam, undecanolactam, and laurolactam.

4. The use according to any of claims 1 to 3, wherein:
- the semi-crystalline polyamide or at least one semi-crystalline polyamide of the mixture of semi-crystalline polyamides, and/or
- the amorphous polymer or at least one amorphous polyamide of the mixture of amorphous polyamides,
comprises a unit obtained from an amino acid, notably selected from among 9-aminononanoic acid, 10-aminodecanoic acid, 12-aminododecanoic acid, 11-aminoundecanoic acid and N-heptyl-11-aminoundecanoic acid.

5. The use according to any of claims 1 to 4, wherein:
- the semi-crystalline polyamide or at least one semi-crystalline polyamide of the mixture of semi-crystalline polyamides, and/or
- the amorphous polymer or at least one amorphous polyamide of the mixture of amorphous polyamides,
comprises a unit fitting the formula (Ca diamine).(Cb diacid), with a representing the number of carbon atoms of the diamine and b representing the number of carbon atoms of the diacid, a and b being each independently comprised between 4 and 36, the Ca diamine being notably aliphatic, cycloaliphatic or alkylaromatic and/or the Cb diacid being notably aliphatic, cycloaliphatic or aromatic.

6. The use according to claim 5, wherein the Ca diamine is:
- either a linear and aliphatic diamine of formula:
H₂N-(CH₂)ₐ-NH₂
wherein a is an integer comprised between 4 and 36,
- or a cycloaliphatic diamine of formula: 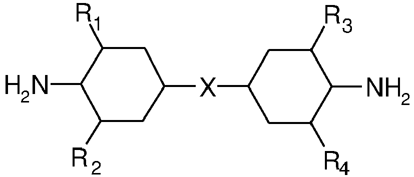 wherein:
- R₁, R₂, R₃ and R₄ represent independently a group selected from among a hydrogen atom or an alkyl with 1 to 6 carbon atoms and
- X represents either a simple bond, or a divalent group consisting of:
- a linear or branched aliphatic chain comprising from 1 to 10 carbon atoms, optionally substituted with cycloaliphatic or aromatic groups with 6 to 8 carbon atoms,
- of a cycloaliphatic group with 6 to 12 carbon atoms.

7. The use according to claim 5, wherein the Ca diamine is selected from among:
- a linear and aliphatic Ca diamine selected from among butanediamine (a=4), pentanediamine (a=5), hexanediamine (a=6), heptanediamine (a=7), octanediamine (a=8), nonanediamine (a=9), decanediamine (a=10), undecanediamine (a=11), dodecanediamine (a=12), tridecanediamine (a=13), tetradecanediamine (a=14), hexadecanediamine (a=16), octadecanediamine (a=18), octadecanediamine (a=18), eicosanediamine (a=20), docosanediamine (a=22) and the diamines obtained from fatty acids,
- a cycloaliphatic diamine selected from among bis(3,5-dialkyl-4-aminocyclohexyl)methane, bis(3,5-dialkyl-4-aminocyclohexyl) ethane, bis(3,5-dialkyl-4-aminocyclohexyl)propane, bis(3,5- dialkyl-4-aminocyclohexyl)butane, bis-(3-methyl-4-aminocyclohexyl)-methane, p-bis(aminocyclohexyl)methane and bis(aminocyclohexyl)propane, and
- an alkylaromatic diamine selected from among 1,3-xylylene diamine and 1,4-xylylene diamine.

8. The use according to any of claims 5 to 7, wherein the Cb diacid is selected from among:
- a linear aliphatic diacid selected from among succinic acid (b=4), ), pentanedioic acid (b=5), adipic acid (b=6), heptanedioic acid (b=7), octanedioic acid (b=8), azelaic acid (b=9), sebacic acid (b=10), undecanedioic acid (b=11), dodecanedioic acid (b=12), brassylic acid (b=13), tetradecanedioic acid (b=14), hexadecanedioic acid (b=16), octadecanoic acid (b=18), octadecenedioic acid (b=18), eicosanedioic acid (b=20), docosanedioic acid (b=22) and dimers of fatty acids containing 36 carbons, and
- an aromatic diacid selected from among terephthalic acid, isophthalic acid, and naphthalenic diacid.

9. The use according to any of claims 1 to 8, wherein the semi-crystalline polyamide, or at least one semi-crystalline polyamide of the mixture of semi-crystalline polyamides, is a homopolyamide.

10. The use according to any of claims 1 to 9, wherein the average number of carbon atoms (C) relatively to the nitrogen atom (N) of the semi-crystalline polyamide, or at least of a semi-crystalline polyamide of the mixture of semi-crystalline polyamides, is greater than or equal to 9, preferably greater than or equal to 10, more preferably greater than or equal to 11, notably equal to 11.

11. The use according to claim 10, wherein the semi-crystalline polyamide, or at least one semi-crystalline polyamide of the mixture of semi-crystalline polyamides, is PA11.

12. The use according to any of the preceding claims, wherein the composition has a water absorption rate at 23°C in water measured according to the ISO 62 standard revised in 2011 at least 25% less, notably 30% less, or even 35% less than that of the amorphous polyamide or of the mixture of amorphous polyamides which it contains.

13. The use according to any of the preceding claims, wherein the composition has a water absorption rate at 23°C in an atmosphere for which the relative humidity is 50% as measured according to the ISO 62 standard revised in 2011 at least 35% less, notably 40% less than that of the amorphous polyamide or of the mixture of amorphous polyamides which it contains.

14. The use according to any of the preceding claims, wherein the composition has a water absorption rate at 23°C in water as measured according to the ISO 62 standard revised in 2011 at least 10% less, notably 15% less, or even 20% less, than the theoretical water absorption rate obtained by computation by adding the water absorption rates measured for each of the ingredients of the composition in the mass proportion of each of the ingredients of the composition.

15. The use according to any of the preceding claims, wherein the composition has a water absorption rate at 23°C in an atmosphere for which the relative humidity is 50% as measured according to the ISO 62 standard revised in 2011 at least 20% less, notably 25% less, than the theoretical water absorption rate obtained by computation by adding the water absorption rates measured for each of the ingredients of the composition in the mass proportion of each of the ingredients of the composition.
